# EUROPÄISCHE PATENTANMELDUNG

(11) **EP 2 335 798 A1**
(43) Veröffentlichungstag der Anmeldung: **22.06.2011**
(21) Anmeldenummer: 10193398.4
(22) Anmeldetag: 02.12.2010
(51) Int. Cl.: B01D 45/14, B04B 5/08, B04B 7/12

(54) **Einrichtung zur Trennung eines Gas-Flüssigkeit-Gemischs**

(30) Priorität: 02.12.2009 DE 202009016309 U
(71) Anmelder: MANN + HUMMEL GMBH, 71638 Ludwigsburg (DE)
(72) Erfinder: Kolczyk, Markus, 74395 Mundelsheim (DE)

(57) **Zusammenfassung**

Die Erfindung betrifft eine Einrichtung zur Trennung eines Gas-Flüssigkeit-Gemischs durch Abtrennen und Koagulieren der Flüssigkeitspartikel, wobei eine Zentrifugentrommel vorgesehen ist, welche in Rotation versetzt wird. Innerhalb der Zentrifugentrommel ist ein Labyrinthsystem vorgesehen, welches für wenigstens eine Umlenkung des Gas-Flüssigkeit-Gemischs sorgt.

## Beschreibung

### Technisches Gebiet

Die Erfindung betrifft eine Einrichtung zur Trennung eines Gas-Flüssigkeit-Gemischs durch Abtrennen und Koagulieren der Flüssigkeitspartikel, wobei eine Zentrifugentrommel vorgesehen ist, welche in Rotation versetzt wird.

### Stand der Technik

Aus der DE 10 2006 024 820 A1 ist eine Einrichtung zur Trennung eines Gas-Flüssigkeit-Gemischs bekannt. Diese verwendet einen Zyklon als einzige Trenneinrichtung, dessen Innenwandfläche zur Flüssigkeitsabtrennung erforderlich ist, wobei eine Vielzahl kleiner Strömungsschikanen in der Form eines dünnen, feinporigen Fasergestricks oder Vlieses vorgesehen ist.

Bei solchen Systemen ist allein die Strömungsgeschwindigkeit für den Abscheidegrad maßgebend, d. h. bei einer geringen Strömungsgeschwindigkeit verringert sich der Abscheidegrad, bei einer zu hohen Strömungsgeschwindigkeit verringert sich ebenso der Abscheidegrad, da ein Großteil des Gas-Flüssigkeit-Gemischs die Flüssigkeit mitreißt und die Zeit zum Abtrennen und zum Austragen der Flüssigkeit zu kurz ist.

Es ist ferner aus der EP 1 068 890 B1 eine Einrichtung zur Trennung eines Gas-Flüssigkeit-Gemischs bekannt, die als ein sogenannter Impactor ausgebildet ist. Dabei handelt es sich um eine Trenneinrichtung, bei der das Gas-Flüssigkeit-Gemisch nach einer Beschleunigung durch beispielsweise eine Düse auf eine Trennfläche aufprallt, an der eine Strömungsablenkung um mindestens 60° erfolgt. Trägheitsbedingt werden durch eine solche Strömungsumlenkung Flüssigkeitsanteile aus dem Gemisch abgeschieden.

Aus der DE 40 37 983 A1 ist zur Trennung eines Gas-Flüssigkeit-Gemischs ein Zyklon bekannt, dessen dem rotierenden Gemischstrom ausgesetzte Innenwandbereiche mit einer relativ dicken Schaumstoffauskleidung belegt sind. Derartige Schaumstoffe besitzen relativ große Poren und beeinträchtigen, d. h. bremsen, die Rotationsströmung daher erheblich. Dies gilt insbesondere für dicke Schaumstoffauskleidungen, wie sie dort vorgesehen sind.

Der Erfindung liegt die Aufgabe zugrunde, eine Einrichtung zur Trennung eines Gas-Flüssigkeit-Gemischs zu schaffen, die auch bei unterschiedlichen Strömungsgeschwindigkeiten eine optimale Abtrennung der Flüssigkeit von dem Gas oder der Luft erzeugt.

Diese Aufgabe wird durch die Merkmale des unabhängigen Anspruchs 1 gelöst.

### Offenbarung der Erfindung

Der wesentliche Vorteil der Erfindung liegt darin, dass eine Zentrifugentrommel vorgesehen ist, welche in Rotation versetzt wird, und innerhalb dieser Zentrifugentrommel ein Labyrinthsystem vorgesehen ist, welches für wenigstens eine Umlenkung des Gas-Flüssigkeit-Gemischs sorgt. Damit ist gewährleistet, dass bei unterschiedlichen Strömungsgeschwindigkeiten eine Fehlleitung des Gemischs verhindert wird. Dies bedeutet, dass das Gemisch grundsätzlich umgelenkt wird und damit Flüssigkeitströpfchen aufgrund der Umleitung abgeschieden werden.

Die Umlenkung erfolgt gemäß einer Weiterbildung der Erfindung dadurch, dass innerhalb der Zentrifugentrommel Trennflächen oder Trennwände angeordnet sind, die vom Zentrum der Zentrifugentrommel nach außen geradlinig verlaufen. Gleichzeitig sind weitere Trennflächen oder Trennbleche angeordnet, die von der Außenwandung der Trommel nach innen verlaufen und zwar jeweils zwischen den von innen nach außen verlaufenden Trennflächen. Somit ist, sofern die Strömung des Gas-Flüssigkeit-Gemischs zunächst nach außen erfolgt, auch eine Strömungsumkehr im äußeren Bereich erforderlich, damit wieder eine Strömung nach innen und zum Reingasaustritt gesichert ist. Letztendlich ist es zweckmäßig, das zu reinigende Gas im Zentrum der Zentrifugentrommel einzuleiten und auch im Zentrum der Zentrifugentrommel wieder abzuleiten. Umgekehrt ist es selbstverständlich auch möglich, das zu reinigende Gas im äußeren Bereich einzuleiten, nach innen umzulenken und im äußeren Bereich wieder abzuleiten.

Eine alternative Ausgestaltung der Einrichtung im Rahmen einer Weiterbildung sieht vor, dass im Zentrumsinneren der Zentrifugentrommel ein schneckenförmig ausgestaltetes Leitelement vorgesehen ist, welches für die Umlenkung des Gas-Flüssigkeit-Gemischs sorgt. Damit wird gewährleistet, dass die Strömung nicht direkt nach außen erfolgt, sondern dass die Strömung über mehrere Windungen der Schnecke nach außen oder alternativ nach innen erfolgt, und damit ein Abtrennen der Flüssigkeit an dem schneckenförmig ausgestalteten Leitelement gewährleistet ist.

Eine weitere alternative Ausgestaltung der Erfindung liegt in der Bildung von zickzackförmig verlaufenden Leitflächen, die vom Zentrum der Zentrifugentrommel nach außen verlaufen, wobei die Spitzen einer zickzackförmig verlaufenden Leitfläche in die Vertiefung einer weiteren zickzackförmig verlaufenden Leitfläche eingreifen kann. Damit sind auch hier ein oder mehrere Umlenkungen gewährleistet.

Ausgestaltungsgemäß kann innerhalb der Zentrifugentrommel auch eine sogenannte Leitwindung angeordnet sein. Wesentlich ist das Prinzip der Umkehrung der Strömung durch entsprechende Umkehrungsmaßnahmen wie Leitbleche oder Leitwände.

Gemäß einer weiteren Ausgestaltung der Erfindung wird das zu trennende Gemisch innerhalb der Zentrifugentrommel über ein Mittelrohr in die Trommel geleitet und die Trommel besitzt am geodätisch unteren Ende eine Leitfläche, an welcher der Flüssigkeitsanteil ablaufen kann. Durch diese Leitfläche ist ein zuverlässiger Ablauf möglich, bei welchem die Flüssigkeit durch die Luftströmung nicht mehr in eine falsche Richtung geleitet werden kann.

Die Zentrifugentrommel wird weiterbildungsgemäß mit einem Fremdantrieb betrieben, beispielsweise einem elektromotorischen Antrieb. Es besteht auch die Möglichkeit, eine Turbine zum Antreiben der Zentrifugentrommel zu verwenden.

Zusammenfassend lässt sich feststellen, dass der innere Aufbau der Einrichtung und insbesondere des Labyrinths so gestaltet ist, dass möglichst viel Fläche bereitsteht, an der die Flüssigkeit abgeschieden werden kann. Eine möglichst feingliedrige Struktur ist dabei vorteilhaft. Die Flächen sind über die Einstellung der Rotationsrichtung entgegen dem Gasstrom zu bewegen, um die Flüssigkeit und die Flüssigkeitströpfchen möglichst effektiv an die Flächen strömen zu lassen.

Generell kann über die Strömungsrichtung des Labyrinths und die Geometrie der Prallflächen neben dem Abscheidegrad auch der Differenzdruck reguliert werden. Bei Anordnung der Flächen ähnlich einer Kreiselpumpe kann z. B. sogar Unterdruck erzeugt werden. Der Unterdruck kann aber auch durch eine entsprechende pumpenartige Struktur im Reinbereich der Achse oder in einer weiteren Kammer auf der Reinseite erzeugt werden. Der Rotor kann mit dem Labyrinth als einstückige Einheit, aber auch als mehrteiliges System gestaltet werden, welches montiert und aufgebaut wird.

Die Einrichtung zur Trennung des Gas-Flüssigkeit-Gemischs kann beispielsweise auch auf einer Ölzentrifuge aufgesetzt werden. Insbesondere bei der Verwendung in Brennkraftmaschinen ist eine Kombination aus Ölzentrifuge und Kurbelgehäuseentlüftungszentrifuge möglich.

Diese und weitere Merkmale sind nicht nur aus den Ansprüchen sondern auch aus der Beschreibung und den Zeichnungen herleitbar.

### Kurze Beschreibung der Zeichnungen

Die Erfindung wird nachfolgend anhand von Ausführungsbeispielen näher erläutert. Es zeigen:
- Figur 1: den allgemeinen Aufbau einer Einrichtung zur Trennung eines Gas-Flüssigkeit-Gemischs,
- Figur 2: eine Zentrifuge in einer Detaildarstellung,
- Figur 3: die Draufsicht auf eine Zentrifugentrommel in einer ersten Variante,
- Figur 4: die Draufsicht auf eine Zentrifugentrommel in einer zweiten Variante,
- Figur 5: die Draufsicht auf eine Zentrifugentrommel in einer dritten Variante und
- Figur 6: die Draufsicht auf eine Zentrifugentrommel in einer vierten Variante.

### Ausführungsform(en) der Erfindung

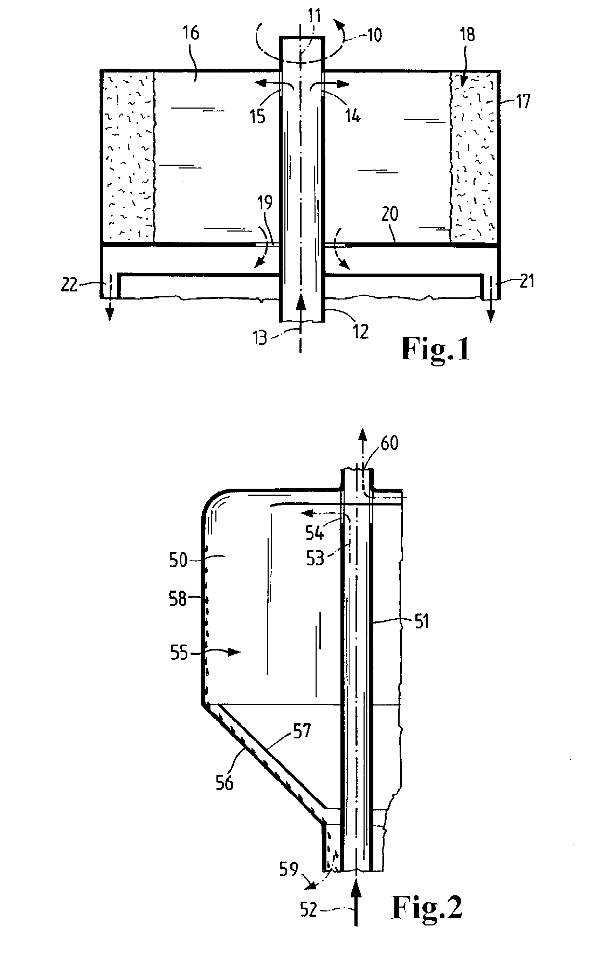

Figur 1 zeigt eine Standardzentrifuge mit Fremdantrieb. Der Antrieb ist hier nicht gezeigt, erfolgt aber - wie der Pfeil 10 beschreibend darstellt - um die Zentralachse 11. Die Zentrifugengeschwindigkeit richtet sich nach dem gewünschten Trennungsverhalten der Zentrifuge und liegt z.B. bei 30.000 Umdrehungen pro Minute. Die Zentrifuge besitzt ein Einströmrohr 12, durch das das zu reinigende Öl gemäß dem Pfeil 13 von unten nach oben einströmt und über die Öffnungen 14, 15 in den Zentrifugenraum 16 geleitet wird. Die Zentrifuge ist konzentrisch aufgebaut. Es können auch mehrere Einströmöffnungen zum gleichmäßigen Verteilen des zu reinigenden Öls angeordnet sein.

An der Innenwand 17 der Zentrifuge lagert sich der im Öl enthaltene Schmutz - wie mit dem Bezugszeichen 18 dargestellt - ab und bildet dort eine Schmutzschicht, die gelegentlich entfernt werden muss. Das gereinigte Öl strömt durch einen ringförmigen Spalt 19 an einer Trennwand 20 vorbei zu Abströmdüsen 21, 22 und wird von einem nicht dargestellten Gehäuse aufgefangen und über einen Ölablauf abgeführt.

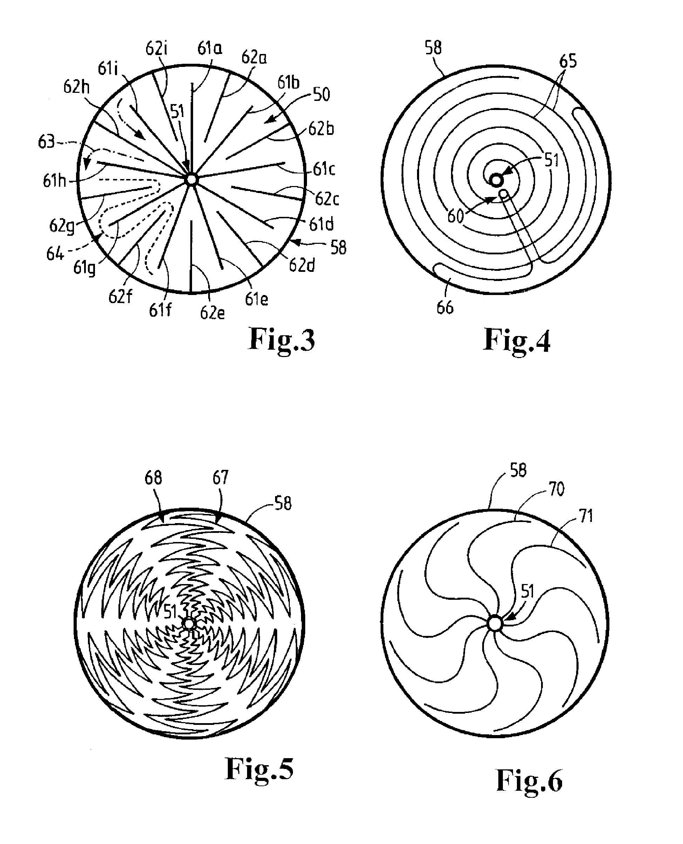

Figur 2 zeigt in einer Detaildarstellung eine Zentrifuge mit einer Zentrifugentrommel 50, die in einem üblichen Zentrifugengehäuse angeordnet ist. Diese Zentrifugentrommel 50 besitzt ein Mittelrohr 51, durch welches von unten gemäß dem Pfeil 52 das Gas-Flüssigkeit-Gemisch oder das sogenannte Rohgas eintritt, nach oben strömt und gemäß dem Pfeil 53 über eine Öffnung 54 in den Zentrifugenraum 55 einströmt. Der Zentrifugenraum wird in Figur 3 näher erläutert. Dieser Zentrifugenraum verläuft im unteren Bereich trichterförmig, d. h. er besitzt einen trichterförmigen Boden 56. Oberhalb dieses Bodens ist ein Leitblech 57 angeordnet. Die an der Wand 58 sich sammelnde Flüssigkeit läuft nach unten ab und zwischen dem Leitblech 57 und dem Boden 56 nach unten und gemäß dem Pfeil 59 in einen hier nicht dargestellten Auffangbehälter. Das gereinigte Gas wird nach oben über einen zentrisch angeordneten Reingasaustritt 60, der sich oberhalb des Rohgaseintritts 54 befindet, abströmen und kann über ein hier nicht dargestelltes Rohr weitergeleitet werden.

Figur 3 zeigt in einer Draufsicht die in Figur 2 dargestellte Zentrifugentrommel in einer ersten Variante. Hier besitzt die Zentrifugentrommel 50 von Zentrum, d. h. vom Mittelrohr 51 ausgehend, eine Vielzahl von Trennflächen 61a, 61b, 61c, 61d, 61e, 61f, 61g, 61 h, 61i. Diese besitzen an ihrem äußeren Ende einen bestimmten Abstand zu der Zentrifugentrommelwand 58. Außerdem sind an der Trommelwand 58 ebenfalls von außen nach innen verlaufende Trennflächen 62a, 62b, 62c, 62d, 62e, 62f, 62g, 62h, 62i vorgesehen, die ebenfalls nicht vollständig bis nach innen, d. h. bis zum Zentrum verlaufen. Das zu trennende Gas-Flüssigkeit-Gemisch strömt gemäß dem Pfeil 63 von innen durch die Eintrittsöffnung 51 ein und wird gemäß der punktierten Linie 64 (teilweise dargestellt) mehrfach durch die Trennflächen 61a-i, 62a-i umgelenkt. Durch diese Umlenkung gelangen die Flüssigkeitströpfchen in dem Gemisch nach außen an die Trommelwand 58 und werden, wie in Figur 2 gezeigt, nach unten abgleitet. Sofern der Rohgaseintritt sich vom Zentrum der Zentrifugentrommel aus gesehen linksseitig befindet und der Reingasaustritt rechtsseitig, wie auch in Figur 2 gezeigt, muss das Gas-Flüssigkeit-Gemisch mindestens über die Hälfte des Umfangs der Zentrifugentrommel laufen und mehrere Umlenkungen umströmen. Dies gewährleistet einen hohen Abscheidegrad bezüglich der abzuscheidenden Flüssigkeit.

Figur 4 zeigt eine zweite Variante eines Leitelements 65, das innerhalb der Zentrifugentrommel angeordnet ist. Dieses Leitelement ist schneckenförmig ausgestaltet, sodass das zu reinigende Gas-Flüssigkeit-Gemisch, welches im Zentrum eintritt, mehrere Umläufe durchführen muss bis es letztendlich im äußeren Bereich in einem Reingassammelvolumen 66 einströmt und von dort zum Reingasaustritt 60 geführt wird.

Figur 5 zeigt eine dritte Variante. Hier sind zickzackförmig aufgebaute Leitflächen 67, 68 vorgesehen, die teilweise ineinandergreifen. Durch die zickzackförmig aufgebauten Leitflächen wird auch hier wiederum das Gas-Flüssigkeit-Gemisch mehrfach umgelenkt. Diese Mehrfachumlenkung sorgt für ein optimales Abscheiden von Flüssigkeit und eine hohe Reinheit des nach außen geleiteten Gases bzw. der nach außen geleiteten Luft.

Figur 6 zeigt als vierte Variante Leitwindungen 70, 71, die auch in diesem Fall dafür sorgen, dass die Flüssigkeit von dem Gas abgetrennt wird und die Flüssigkeit zunächst auf den Leitwindungen auftritt, von diesen Leitwindungen nach außen an die Trommelaußenwand geführt wird und von dort nach unten abläuft und, wie in Figur 2 gezeigt, zwischen Leitblech 57 und Boden 56 abströmen kann.

## Patentansprüche

1. Einrichtung zur Trennung eines Gas-Flüssigkeit-Gemischs durch Abtrennen und Koagulieren der Flüssigkeitspartikel, wobei eine Zentrifugentrommel vorgesehen ist, welche in Rotation versetzt wird, **dadurch gekennzeichnet, dass** innerhalb der Zentrifugentrommel ein Labyrinthsystem vorgesehen ist, welches für wenigstens eine Umlenkung des Gas-Flüssigkeit-Gemischs sorgt.

2. Einrichtung nach Anspruch 1, **dadurch gekennzeichnet, dass** die Umlenkung aus vom Zentrum nach außen verlaufenden Trennflächen und vom Umfang nach innen verlaufenden Trennflächen besteht.

3. Einrichtung nach Anspruch 1, **dadurch gekennzeichnet, dass** vom Zentrumsinneren der Trommel wenigstens ein schneckenförmig ausgestaltetes Leitelement vorgesehen ist, welches für die Umlenkung des Gas-Flüssigkeit-Gemischs sorgt.

4. Einrichtung nach Anspruch 1, **dadurch gekennzeichnet, dass** wenigstens zwei vom Zentrum nach außen verlaufende zickzackförmig aufgebaute Leitflächen vorgesehen sind, die zumindest teilweise ineinandergreifen und für die Umlenkung des Gas-Flüssigkeit-Gemischs sorgen.

5. Einrichtung nach Anspruch 1, **dadurch gekennzeichnet, dass** wenigstens zwei Leitwindungen innerhalb der Zentrifugentrommel das Labyrinthsystem erzeugen.

6. Einrichtung nach einem der vorherigen Ansprüche, **dadurch gekennzeichnet, dass** das Gemisch innerhalb der Trommel über ein Rohr in die Trommel geleitet wird und die Trommel am geodätisch unteren Ende eine Leitfläche zum beruhigenden Ablaufen des Flüssigkeitsanteils aufweist.

7. Einrichtung nach einem der vorherigen Ansprüche, **dadurch gekennzeichnet, dass** die Trommel einen Fremdantrieb, insbesondere einen elektromotorischen Antrieb oder einen mit einem Druckmedium versorgten Turbinenantrieb aufweist.
